# FASCICULE DE BREVET EUROPEEN

(11) **EP 0 973 007 B1**
(45) Date de publication et mention de la délivrance du brevet: **17.09.2003**
(21) Numéro de dépôt: 98810680.3
(22) Date de dépôt: 16.07.1998
(51) Int. Cl.: G01B 3/18

(54) **Dispositif de mesure longitudinale**
Vorrichtung für longitudinale Messungen
Device for longitudinal measurement

(43) Date de publication de la demande: 19.01.2000
(73) Titulaire: TESA SA, 1020 Renens (CH)
(72) Inventeur: Zanier, Adriano, 1008 Prilly (CH); Paudex, Michel, 1022 Chavannes (CH); Bovey, Arthur, 1003 Lausanne (CH)
(74) Mandataire: BOVARD AG - Patentanwälte

(56) Documents cités:
- EP-A- 0 538 184
- EP-A- 0 791 801
- DE-A- 2 657 651
- FR-A- 2 356 120
- GB-A- 1 230 417
- GB-A- 1 361 991
- US-A- 3 835 544
- US-A- 3 877 149
- US-A- 4 268 969
- US-A- 5 433 016
- PATENT ABSTRACTS OF JAPAN vol. 014, no. 430 (P-1106), 14 septembre 1990 & JP 02 167425 A (MUTOH IND LTD), 27 juin 1990

## Description

La présente invention concerne un dispositif de mesure longitudinale selon le préambule de la revendication 1, par exemple un micromètre. La présente invention concerne plus particulièrement un micromètre comprenant une vis filetée engagée dans une douille fixe et comportant des moyens d'ajustage du jeu entre la douille et la vis.

Le document de brevet US5433016 décrit un micromètre électronique conventionnel. Ce micromètre comprend une vis micrométrique engagée dans une douille filetée solidaire de la touche fixe du micromètre. En tournant la vis micrométrique au moyen du tambour du micromètre, on parvient ainsi à la déplacer longitudinalement par rapport à la touche fixe. Un système de mesure capacitif mesure le nombre de rotations effectuées par la vis micrométrique et permet ainsi de déterminer la distance entre l'extrémité libre de cette dernière et la touche fixe.

Afin de mesurer des distances avec une précision et une résolution optimale, de l'ordre du micron, il est nécessaire de réduire au maximum le jeu mécanique entre la vis micrométrique et la douille fixe. Dans ce but, une portion de la douille est conique et munie de plusieurs fentes longitudinales. Afin d'ajuster le jeu, on visse un écrou sur cette portion de la douille. En serrant davantage l'écrou, on modifie son point de contact avec la portion conique de la douille, ce qui entraîne une déformation de cette dernière au niveau des fentes et une réduction du diamètre de la douille, de façon à compenser le jeu avec la vis.

En serrant l'écrou externe, on déforme cependant également le filetage interne de la douille au niveau des fentes. En outre, les déformations de la douille sont concentrées dans la région des fentes, en sorte que la douille comprimée n'est plus parfaitement circulaire et qu'un déplacement sans à-coups de la vis micrométrique n'est pas garanti. Il est donc nécessaire d'aléser et de tarauder simultanément la douille avec l'écrou externe légèrement en contrainte. Cette opération d'ajustage doit être effectuée manuellement, lors de l'assemblage du micromètre, au moyen d'un outil d'alésage et de taraudage fabriqué spécialement. Le résultat n'est pas toujours garanti, et il est parfois nécessaire de la répéter plusieurs fois. Par ailleurs, l'usinage des fentes et le taraudage produisent fréquemment des bavures qu'il est difficile d'éliminer complètement et qui sont susceptibles de perturber le fonctionnement du micromètre.

Le brevet US3877149 décrit un micromètre dans lequel le jeu entre la douille et la vis micrométrique est ajusté au moyen d'une goupille appuyée en un point sur la périphérie de la douille. La pression entre la douille et la vis micrométrique est ajustée uniquement localement au point de contact entre la goupille et la douille, en sorte que la déformation de la douille est très importante dans ce dispositif.

Le brevet GB1361991 décrit un micromètre utilisant une douille en matériau synthétique déformable pour compenser le jeu avec la vis micrométrique. Une douille en matériau synthétique est cependant difficile à usiner avec une précision importante et de surcroît susceptible de s'user rapidement. Cette construction est donc inadaptée à des micromètres de haut de gamme.

Un but de la présente invention est donc de proposer un dispositif de mesure longitudinale, par exemple un micromètre, qui permette d'éviter ou de réduire les inconvénients des dispositifs de l'art antérieur. En particulier, un but de la présente invention est de proposer un micromètre dans lequel aucun usinage de matière n'est nécessaire pour ajuster le jeu entre la douille et la vis micrométrique lors du montage.

Selon l'invention, ces buts sont atteints au moyen d'un dispositif de mesure longitudinale présentant les caractéristiques de la revendication indépendante, des variantes préférentielles étant par ailleurs indiquées dans les revendications dépendantes.

En particulier, ces buts sont atteints au moyen d'un dispositif de mesure longitudinale dans lequel la douille est dépourvue de fentes longitudinales, en particulier dans sa portion conique. La déformabilité de la douille est donnée par un diamètre externe variable le long de sa périphérie, de préférence par une pluralité de méplats autour de sa périphérie.

Cette construction apporte l'avantage inattendu de permettre des modifications du diamètre de la douille sans endommager le filetage interne et sans modifier la circularité de la douille. L'invention permet donc de compenser le jeu dans un micromètre sans nuire au fonctionnement précis de la vis micrométrique comme dans les dispositifs de l'art antérieur.

D'autres avantages de l'invention seront plus apparents à la lecture de la description d'un exemple de réalisation de l'invention illustrée par les figures qui montrent :
La figure 1 une vue de côté d'un micromètre électronique.
La figure 2 une vue en coupe d'un micromètre selon l'invention.
La figure 3 une vue d'ensemble de la douille de l'invention, la partie supérieure de la figure étant représentée en coupe tandis que la partie inférieure est une vue de profil.
La figure 4 une vue agrandie de l'extrémité de la douille de l'invention, la partie supérieure de la figure étant représentée en coupe tandis que la partie inférieure est une vue de profil.
La figure 5 une coupe transversale selon l'axe A-A de la douille illustrée sur la figure 4.
La figure 6 une vue en coupe de l'extrémité de la douille de l'invention avec l'écrou d'ajustage monté.
La figure 7 un agrandissement d'une portion de la portion de la figure 1 montrant plus particulièrement le système de mesure capacitif.

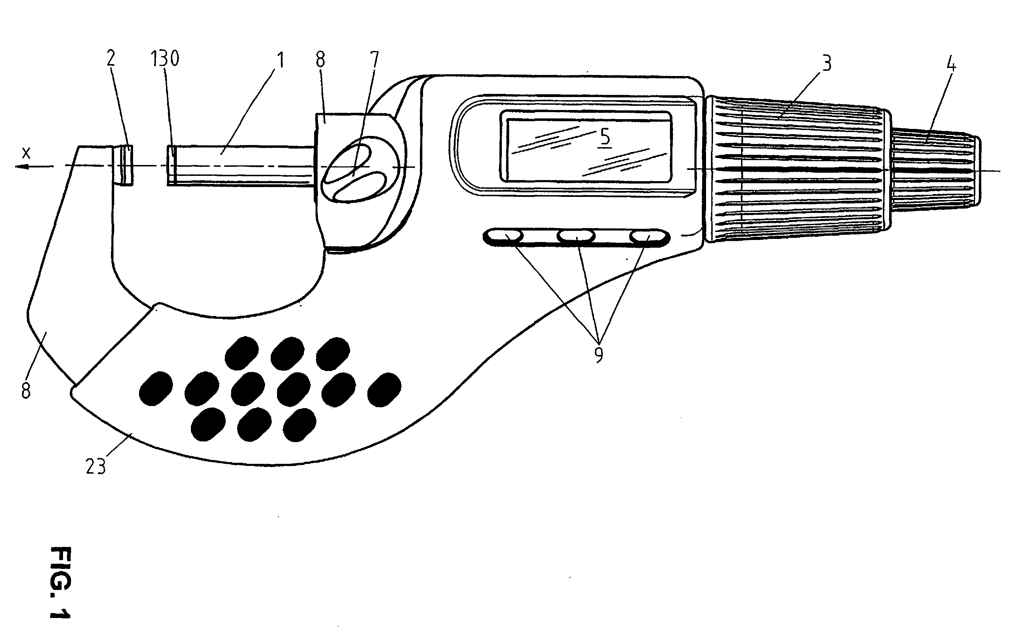

La figure 1 illustre une vue de côté d'un micromètre électronique permettant de mesurer la distance entre le bout rapporté 130 de la touche 1 (solidaire de la vis micrométrique) et la touche fixe 2, solidaire de la mâchoire et du corps 8 du micromètre. La distance mesurée est affichée sur un écran 5, par exemple sur un écran à cristaux liquides, l'affichage étant commandé par les touches de fonction 9 permettant par exemple de sélectionner l'unité de mesure ou de choisir entre la mesure de distances absolue ou relative. La vis 1 peut être déplacée selon l'axe longitudinal de mesure x en tournant le tambour 3 ou, pour un déplacement plus rapide, l'embout de tambour 4. Le déplacement de la vis peut être bloqué en n'importe quelle position au moyen d'un levier de blocage 7. L'ensemble du dispositif est protégé des chocs et des infiltrations d'eau par un boîtier en matériau synthétique 23.

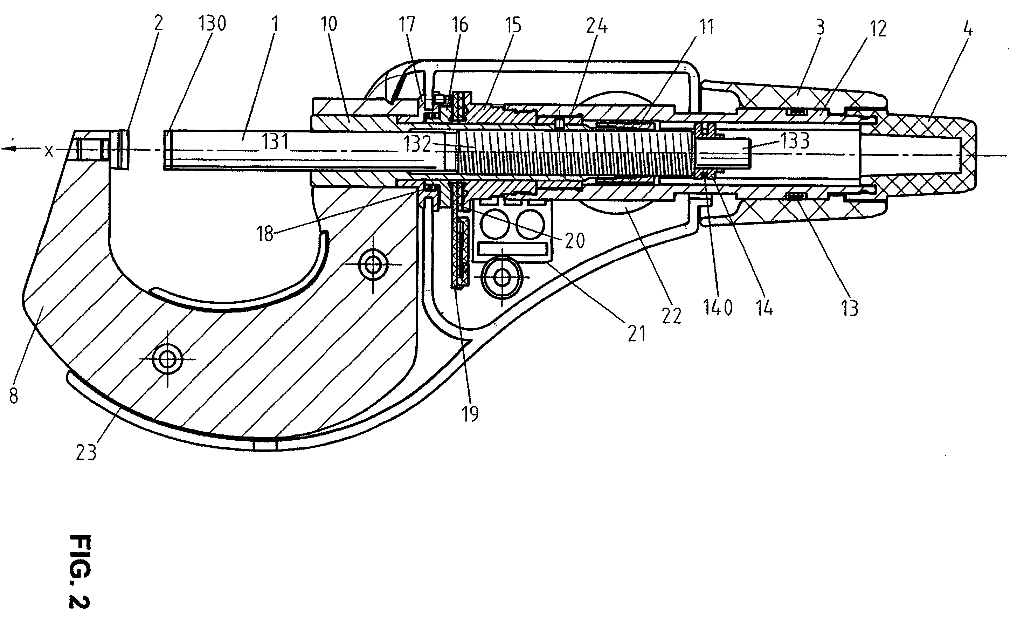

La figure 2 illustre une vue en coupe du micromètre de la figure 1, illustrant notamment les composants du micromètre protégés par le boîtier synthétique 23. On voit sur cette figure que la vis micrométrique 1 comporte pour l'essentiel quatre parties fonctionnelles : le bout rapporté 130, la touche 131 cylindrique qui sort hors du corps du micromètre 8, la portion filetée 132 et la portion de transmission 133. La précision du pas sur la portion filetée est de préférence meilleure que 0,001 millimètre et détermine notamment la précision du micromètre.

La vis 1 peut être mise en rotation au moyen du tambour 3 par l'intermédiaire du ressort de friction 13, de la douille de friction 12 et de la pièce intermédiaire 14 montée sur la portion de transmission 133. Un ressort 140 monté dans une gorge périphérique autour de la pièce intermédiaire 14 permet de transmettre la rotation de la douille de friction 12 à la vis 1. Le ressort de friction 13 permet de découpler le tambour 3 de la vis, notamment en bout de course ou lorsque le bout de la touche est en contact avec la pièce à mesurer, et d'assurer ainsi une pression de mesure presque constante. La vis peut cependant également être mise en rotation directement par l'embout 4, notamment pour assurer un déplacement plus rapide sur des longues distances. Le tambour 3 et l'embout 4 sont de préférence réalisés en matériau synthétique strié afin d'assurer un contact agréable, une bonne prise en main et une esthétique adaptée au boîtier 23. Dans le cas de micromètres de grandes dimensions, un déplacement motorisé est également envisageable. D'autres moyens de transmission de la rotation entre le tambour et la vis, incluant par exemple un dispositif à cliquet tel que décrit notamment dans la demande de brevet EP-A2-791801, peuvent être utilisés dans le cadre de cette invention.

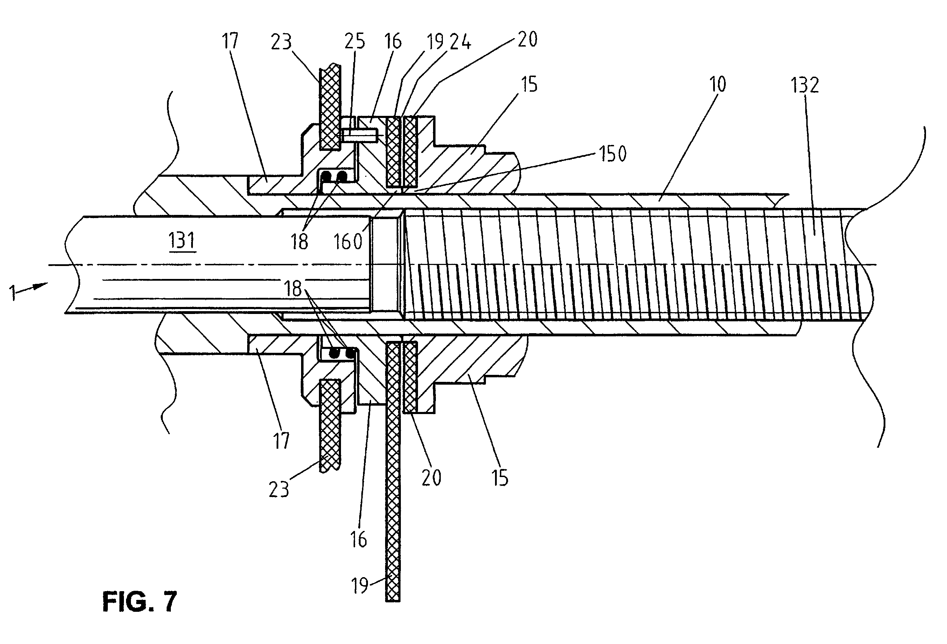

La portion filetée 132 de la vis 1 est engagée dans une douille filetée 10 solidaire du corps 8 du micromètre. En tournant le tambour 3, on déplace ainsi longitudinalement la vis 1 par rapport à la douille filetée 10. Un support de capteur fixe 16 est assemblé sur la douille filetée 10 par l'entremise d'une pièce intermédiaire 17 et d'un ressort 18, comme décrit plus en détail en relation avec la figure 7. Un support de règle 15 en regard du capteur fixe est mis en rotation par la douille 12 lors de la rotation de la vis 1. Les deux supports 16, respectivement 15 portent chacun un capteur 19, respectivement une règle 20, munis chacun d'un réseau d'électrodes capacitives. La superposition des deux réseaux d'électrodes détermine la position angulaire de la règle 20 relativement au capteur fixe. Un circuit électronique 21 alimenté par une source électrique autonome, par exemple par une batterie 22, permet d'alimenter les électrodes capacitives et de déterminer à partir des signaux de mesure reçus la position angulaire de la règle 20. Le circuit électronique 21 est de préférence monté sur un circuit imprimé souple permettant de faciliter le montage dans un boîtier de taille réduite. En mesurant le nombre de tours effectués par la règle 20 à partir d'une position prédéterminée, le circuit électronique 21 parvient ainsi à calculer la position longitudinale de la vis micrométrique 1 et à afficher cette information sur l'écran 5, ou à la transmettre à un dispositif externe par une interface sérielle non représentée. Des exemples de capteurs capacitifs adaptés sont décrits dans le brevet US4578868. La demande de brevet EP836076 décrit un exemple de circuit électronique 21 adapté. L'homme du métier comprendra que d'autres types de systèmes de mesure, y compris des systèmes magnétorésistifs, optiques ou des systèmes purement mécaniques conventionnels, peuvent être utilisés dans le cadre de cette invention.

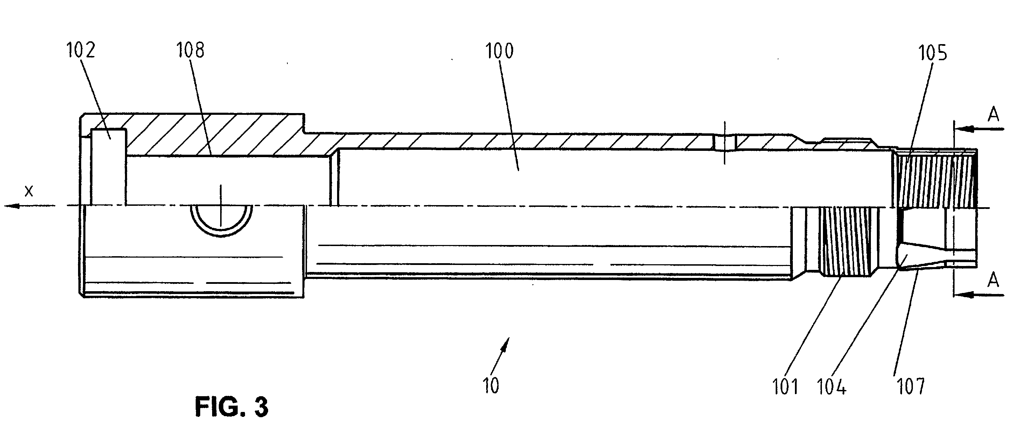

La figure 3 montre une vue d'ensemble de la douille fixe 10, la partie supérieure de la figure étant représentée en coupe tandis que la partie inférieure est une vue de profil. La douille 10 comporte une ouverture longitudinale 100 dont au moins une portion est munie d'un filetage 105 apte à recevoir la vis micrométrique 1 (non illustrée sur cette figure). Un logement annulaire 102 est ménagé à l'extrémité avant de cette ouverture (proche de la touche 130) pour recevoir un joint destiné à prévenir les infiltrations de liquide. Une portion non filetée 108, destinée à recevoir la portion de touche 131 de la vis 1, est alésée avec précision de manière à guider la vis en empêchant tout jeu radial.

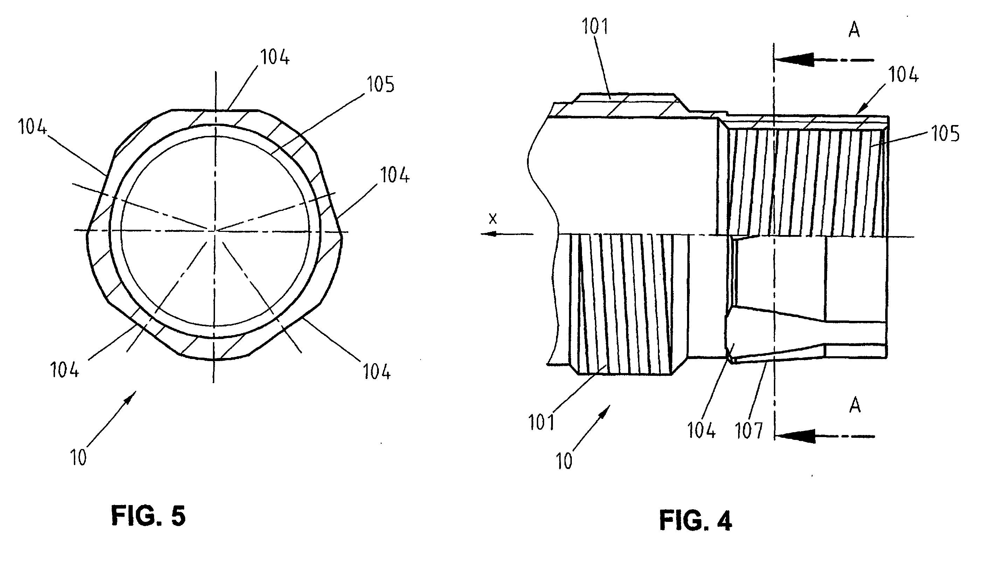

L'extrémité arrière de la douille 10 est représentée de manière agrandie sur la figure 4. La surface externe de cette extrémité comporte une portion conique 107, dont le diamètre croit de l'arrière à l'avant de la douille. Un filetage externe 101 permet de visser l'écrou 11 déjà mentionné à l'extérieur de la douille, afin d'ajuster le battement entre la douille 10 et la vis 1.

En vissant ou dévissant l'écrou 11 sur le filetage externe 101, on modifie la position du point de contact 112 entre l'écrou et la portion conique 107, en sorte que le jeu entre la douille et la vis 1 peut être éliminé en ajustant le diamètre de la douille.

Selon l'invention, la portion conique de la douille 10 est dépourvue des fentes longitudinales connues des dispositifs de l'art antérieur. La déformabilité de cette portion de la douille 10 est donnée par un diamètre variable le long de sa périphérie externe, c'est-à-dire que si la section interne de cette portion de la douille est circulaire, la section externe ne l'est pas, comme on le voit en particulier sur la coupe de la figure 5. Dans l'exemple préférentiel illustré, la surface externe de la portion conique 107 de la douille est munie de segments aplatis 104, ici de cinq segments. Le nombre de segments n'est cependant pas déterminant, bien qu'un nombre de segments supérieur à trois soit préférable pour répartir les éventuelles déformations locales imposées en serrant l'écrou 11. Expérimentalement, il semble en outre qu'un nombre impair de segments aplatis permet de mieux limiter les déformations du filetage 105 et de la circularité de l'ouverture Les segments aplatis s'étendent de préférence au moins sur toute la longueur de la portion de douille 10 munie du filetage 105.

D'autres formes de la portion déformable de la douille 3 peuvent être adoptées dans le cadre de cette invention. Il est par exemple possible de munir toute la surface externe de rainures longitudinales non traversantes de forme, profondeur, largeur et nombre extrêmement variables. La pente de la portion conique 107 peut elle-même selon divers modes de réalisation être plus ou moins accentuée, une pente non linéaire pouvant aussi être adoptée.

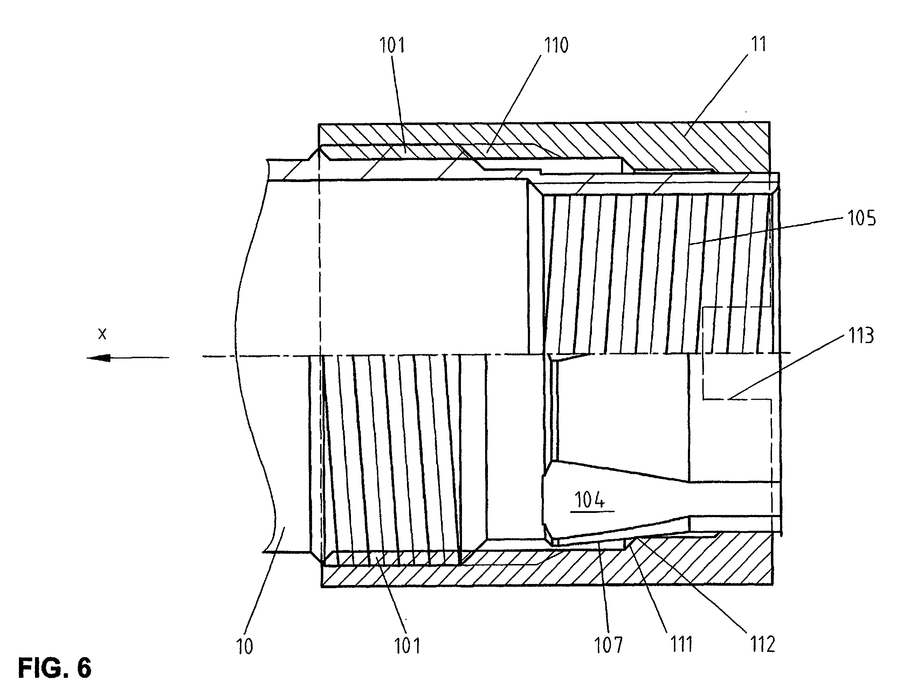

La figure 6 illustre en coupe la même portion de la douille filetée 10 que la figure 4, mais avec l'écrou d'ajustage 11 monté. On voit que l'écrou d'ajustage est muni d'un filetage interne 110 apte à coopérer avec le filetage externe 101 de la douille 10. Selon une caractéristique de l'invention, la portion filetée 101 de la douille 10 est éloignée de la portion conique apte à se déformer, afin de ne pas concentrer les contraintes sur la douille dans une région limitée.

L'ouverture à travers l'écrou 11 comporte un épaulement 111 qui vient en contact en un point 112 avec la portion conique de la douille 10 lorsque l'écrou est engagé assez profondément sur le filetage externe 101. En serrant davantage l'écrou, on déforme l'extrémité de la douille 10 dans la zone comprenant les méplats 104, ce qui a pour effet de réduire le diamètre interne de la douille au niveau du filetage 105, et donc d'ajuster le jeu entre la douille et la vis micrométrique 1 non représentée sur cette figure.

L'écrou 11 peut être monté sur la douille 10 au moment du montage. On observera qu'en raison des très faibles déformations du filetage interne et de la circularité de la douille 10, il n'est pas nécessaire d'effectuer un nouvel alésage et un nouveau taraudage, en sorte qu'aucune opération d'usinage n'est nécessaire dans les ateliers de montage. Le serrage de l'écrou 11 peut soit être ajusté à la main par un ouvrier expérimenté, soit ajusté au moyen d'un outil de serrage dynamométrique engagé dans la rainure 113 prévue à cet effet. L'écrou 11 recouvre entièrement le filetage externe 101 de la douille 10, afin de le protéger.

La figure 7 montre un agrandissement d'une portion de la figure 1 montrant plus particulièrement le système de mesure capacitif. Le système de mesure comporte principalement un capteur fixe 19 monté en regard d'une règle 20, entraînée en rotation avec la vis 1. Le capteur et la règle comportent chacun un réseau d'électrodes non représentés, les deux réseaux d'électrodes étant séparés par un écartement 24. La règle tournante est montée par exemple par collage ou sertissage sur le support 15 ; de la même façon, le capteur fixe 19 est monté sur le support de capteur 16.

L'écartement 24 est donné par une saillie 160 du support 16 en appui contre une saillie 150 du support 15. Selon l'invention, la position longitudinale du capteur fixe 19 n'est toutefois pas bloquée ; au contraire, le capteur fixe peut se déplacer longitudinalement le long de la douille 10. Le support de capteur fixe 16 est toutefois appuyé contre le support de règle tournante 15 par un élément compressible, par exemple un caoutchouc ou une gomme, ou comme dans l'exemple préférentiel illustré un ressort 18 en appui contre la pièce intermédiaire fixe 17. Le ressort permet de compenser des irrégularités et des imprécisions dues aux tolérances de fabrication, et ainsi d'améliorer la précision de la mesure en garantissant le parallélisme et l'écartement entre le capteur 19 et la règle 20 indépendamment notamment de la position angulaire de la règle. Une goupille 25 engagée dans une ouverture au travers de la pièce intermédiaire 17 et du support de capteur 16 permet d'empêcher la rotation de ce dernier.

L'homme du métier comprendra que des micromètres de dimensions très diverses peuvent être réalisées dans le cadre de cette invention, ainsi que d'autres types de dispositifs de mesure longitudinaux.

## Revendications

1. Dispositif de mesure longitudinale comprenant :
une douille (10) comprenant une surface interne (100) au moins partiellement filetée et une surface externe au moins partiellement fitetée, ladite surface externe comprenant au moins une portion conique (107) déformable,
une vis (1) engagée dans ladite douille (10) et apte à être mise en rotation par rapport à ladite douille de manière à se déplacer selon l'axe de mesure (x) longitudinal du dispositif,
un écrou (11) engagé sur le filetage externe (101) de ladite douille et apte à être mis en contact avec ladite portion conique (107) de manière à la déformer pour ajuster le jeu entre ladite vis et ladite douille,
**caractérisé en ce que** ladite portion conique (107) est dépourvue de fentes longitudinales et **en ce que** sa déformabilité est donnée par un diamètre externe variable le long de sa périphérie.

2. Dispositif selon la revendication précédente, **caractérisé en ce que** ladite portion conique (107) comprend des segments aplatis (104).

3. Dispositif selon la revendication précédente, **caractérisé en ce que** ladite portion conique (107) comprend un nombre impair de segments aplatis.

4. Dispositif selon l'une des revendications précédentes, **caractérisé en ce que** ladite portion conique (107) est dépourvue de filetage externe.

5. Dispositif selon l'une des revendications précédentes, **caractérisé en ce que** seule une portion de ladite surface externe apte à être entièrement recouverte par ledit écrou (11) est munie d'un filetage externe (101).

6. Dispositif selon l'une des revendications précédentes, **caractérisé en ce qu'**il est muni d'un capteur (19) et d'une règle (20) en regard dudit capteur, ladite règle (20) étant mise en rotation relative par rapport audit capteur (19) lors du déplacement de ladite vis (1) la position de ladite vis (1) pouvant être déterminée par la position relative dudit capteur (19) et de ladite règle (20),
dans lequel ledit capteur (19) est maintenu longitudinalement en regard de ladite règle (20) à l'aide d'un élément compressible (18).

7. Dispositif selon la revendication 6, **caractérisé en ce que** ledit élément compressible (18) permet d'appuyer ledit capteur (19) en regard de ladite règle (20), l'écartement (24) étant déterminé par une zone de contact (160, 150) entre les supports de ladite règle (15) et dudit capteur (16).

8. Dispositif selon l'une des revendications 6 ou 7, **caractérisé en ce que** la rotation dudit capteur fixe (19) est empêchée par une goupille d'antirotation (25).

9. Dispositif selon l'une des revendications 6 à 8, **caractérisé en ce que** ledit capteur (19) et ladite règle (20) sont munis d'électrodes capacitives, et par un circuit (21) permettant de déterminer la position longitudinale de ladite vis (1) à partir du déphasage entre lesdites électrodes.

10. Dispositif selon l'une des revendications précédentes, **caractérisé en ce qu'**il est conformé en micromètre.

## Patentansprüche

1. Vorrichtung für longitudinale Messungen umfassend:
eine Hülse (10), welche mindestens eine innere Oberfläche (100), die mindestens teilweise mit einem Gewinde versehen ist, und eine äussere Oberfläche aufweist, die mindestens teilweise mit einem Gewinde versehen ist, und welche äussere Oberfläche mindestens einen verformbaren konischen Bereich (107) umfasst.
eine Schraube (1), welche in der genannten Hülse (10) eingesetzt ist und die bezüglich der genannten Hülse verdrehbar ist, so dass sie sich entlang der longitudinalen Messachse (x) der Vorrichtung verschiebt,
eine Schraubenmutter (11), welche auf das äussere Gewinde (101) der genannten Hülse aufgesetzt ist, und welche mit dem genannten konischen Bereich (107) in Kontakt bringbar ist, um diesen zur Einstellung des Spiels zwischen der genannten Schraube und der genannten Hülse zu verformen,
**dadurch gekennzeichnet, dass** der genannte konische Bereich (107) ohne longitudinale Spalten ist und dass die Verformbarkeit durch einen entlang seines Umfangs variablen äusseren Durchmesser gegeben ist.

2. Vorrichtung nach Anspruch 1, **dadurch gekennzeichnet, dass** der genannte konische Bereich (107) abgeflachte Segmente (104) umfasst.

3. Vorrichtung nach dem vorhergehenden Anspruch, **dadurch gekennzeichnet, dass** der genannte konische Bereich (107) eine ungerade Anzahl von abgeflachten Segmenten umfasst.

4. Vorrichtung nach einem der vorhergehenden Ansprüche, **dadurch gekennzeichnet, dass** der genannte konische Bereich (107) kein äusseres Gewinde aufweist.

5. Vorrichtung nach einem der vorhergehenden Ansprüche, **dadurch gekennzeichnet, dass** nur ein Bereich der genannten äusseren Oberfläche ganz durch die genannte Schraubenmutter (11) abdeckbar ist und mit einem äusseren Gewinde (101 ) ausgestattet ist.

6. Vorrichtung nach einem der vorhergehenden Ansprüche, **dadurch gekennzeichnet, dass** sie mit einem Messfühler (19) und einer Skala (20) gegenüber des genannten Messfühlers versehen ist, welche Skala (20) bezüglich des genannten Messfühlers (19) während des Verschiebens der genannten Schraube (1) in Rotation versetzt wird, und die Position der genannten Schraube (1) durch die relative Position des genannten Messfühlers (19) und der genannten Skala (20) bestimmbar ist,
in welcher der genannte Messfühler (19) longitudinal hinsichtlich der genannten Skala (20) mit Hilfe eines kompressiblen Elements (18) gehalten ist.

7. Vorrichtung nach Anspruch 6, **dadurch gekennzeichnet, dass** das genannte kompressible Element (18) erlaubt, dass sich der genannte Messfühler (19) hinsichtlich der genannten Skala (20) abstützt, und der Abstand (24) durch eine Kontaktzone (160, 150) zwischen den Trägem (15, 16) der genannten Skala und dem genannten Messfühler bestimmt ist.

8. Vorrichtung nach einem der Ansprüche 6 oder 7, **dadurch gekennzeichnet, dass** die Rotation des genannten festen Messfühlers (19) durch einen Antirotationsstift (25) gesperrt ist.

9. Vorrichtung nach einem der Ansprüche 6 bis 8, **dadurch gekennzeichnet, dass** der genannte Messfühler (19) und die genannte Skala (20) mit kapazitiven Elektroden und mit einer Schaltung (21) ausgestattet sind, wodurch ermöglicht wird, die longitudinale Position der genannten Schraube (1) auf Grund der Phasenverschiebung zwischen den genannten Elektroden fest zu stellen.

10. Vorrichtung nach einem der vorhergehenden Ansprüche, **dadurch gekennzeichnet, dass** sie als Mikrometer gestaltet ist.

## Claims

1. Device for longitudinal measurement, comprising
a sleeve (10) having an at least partially threaded inner surface (100) and an at least partially threaded outer surface, said outer surface comprising at least one deformable tapered portion (107),
a screw (1) engaged in said sleeve (10) and able to be set in rotation with respect to said sleeve in such a way as to displace itself along the longitudinal measuring axis (x) of the device,
a nut (11) engaged on the threaded portion (101) of said sleeve and able to be put in contact with said tapered portion (107) in such a way as to deform it in order to adjust the play between said screw and said sleeve,
**characterised in that** said tapered portion (107) is devoid of longitudinal slits and **in that** its deformability is provided by an outer diameter variable along its periphery.

2. Device according to claim 1, **characterised in that** said tapered portion (107) comprises flat segments (104).

3. Device according to the preceding claim, **characterised in that** said tapered portion (107) comprises an odd number of flat segments.

4. Device according to one of the preceding claims, **characterised in that** said tapered portion (107) is devoid of external threading (107).

5. Device according to one of the preceding claims, **characterised in that** only a portion of said external surface able to be completely covered by said nut (11) is provided with an external threading (101).

6. Device according to one of the preceding claims, **characterised in that** it is equipped with a transducer (19) and a scale (20) facing said transducer, said scale (20) being set in relative rotation with respect to said transducer (19) upon displacement of said screw (1), it being possible to determine the position of said screw (1) by the relative position of said transducer (19) and of said scale (20),
wherein said transducer (19) is maintained longitudinally facing said scale (20) with the aid of a compressible element (18).

7. Device according to claim 6, **characterised in that** said compressible element (18) allows supporting said transducer (19) facing said scale (20), the spacing (24) being determined by a zone of contact (160, 150) between the supports of said scale (15) and of said transducer (16).

8. Device according to one of the claims 6 or 7, **characterised in that** the rotation of said fixed transducer (19) is prevented by an anti-rotation pin (25).

9. Device according to one of the claims 6 to 8, **characterised in that** said transducer (19) and said scale (20) are provided with capacitive electrodes, and **in that** a circuit (21) is provided allowing the longitudinal position of said screw (1) to be determined starting from the phase shift between said electrodes.

10. Device according to one of the preceding claims, **characterised in that** it is a micrometer.
